# EUROPEAN PATENT SPECIFICATION

(11) **EP 1 317 088 B1**
(45) Date of publication and mention of the grant of the patent: **31.03.2004**
(21) Application number: 02024089.1
(22) Date of filing: 29.10.2002
(51) Int. Cl.: H04J 14/02, H04B 10/08

(54) **Method and apparatus for remote testing of optical cables using a test wavelength**
Verfahren und Anordnung zur Fernüberwachung von optischen Kabeln unter Verwendung einer Prüfwellenlänge
Procédé et dispositif de test à distance de câbles optiques utilisant une longueur d'onde de test

(43) Date of publication of application: 04.06.2003
(73) Proprietor: Agilent Technologies Inc. a Delaware Corporation, Palo Alto, CA 94306 (US)
(72) Inventor: Mumm, Alexander, 70806 Kornwestheim (DE); Schroth, Albrecht, 71083 Herrenberg (DE); Nill, Horst, 72184 Eutingen (DE)
(74) Representative: Barth, Daniel

(56) References cited:
- EP-A- 0 365 371
- EP-A- 0 390 320
- DE-A- 19 830 729
- DE-A- 19 933 268
- FR-A- 2 739 992
- US-A- 5 093 568
- NOBUO TOMITA ET AL: "DESIGN AND PERFORMANCE OF A NOVEL AUTOMATIC FIBER LINE TESTING SYSTEM WITH OTDR FOR OPTICAL SUBSCRIBER LOOPS" JOURNAL OF LIGHTWAVE TECHNOLOGY, IEEE. NEW YORK, US, vol. 12, no. 5, 1 May 1994 (1994-05-01), pages 717-725, XP000480092 ISSN: 0733-8724

## Description

The invention relates to a method for operating a communications network. The invention also relates to a communications network and to a remote test unit within a communications network.

It is known to transmit optical data signals on a cable of the communications network. It is also known to couple a remote test unit to the cable of the communications network and to monitor and test the cable by the remote test unit with respect to defects. If a defect is detected by the remote test unit, a result message is generated and reported e.g. to a central management system of the communications network.

For the purpose of reporting defects, the Internet and/or a Intranet and/or a LAN (local area network) and/or the like is used.

FR-A-2739992 discloses a system for operating a communications network. The teaching of that document forms the preamble to the independent claims.

It is an object of the invention to provide a method for operating an communications network with an improved reporting of defects.

This object is solved by a method according to claim 1. As well, the object is solved by a communications network according to claim 3 and by a remote test unit according to claim 4.

According to the invention, the communications network itself is used not only for the transmission of optical data signals, but as well for the transmission of the result messages from the remote test unit e.g. to the central management system. The communications network itself, therefore, is used for the reporting of defects.

As an advantage, the remote test unit does not have to use the Internet or the Intranet or the like to report a defect e.g. to the central management system. Instead, the communications network itself is used by the remote test unit Therefore, no additional devices or the like are necessary.

Furthermore, the wavelengths of the optical data signals and the optical result messages are different. Therefore, the result messages sent out by the remote test unit over the communications network do not influence or disturb any optical data signal being transmitted. The wavelength used by the optical result message is identical with the wavelength of the optical test signals generated by the remote test unit for monitoring and testing the respective cable of the communications network.

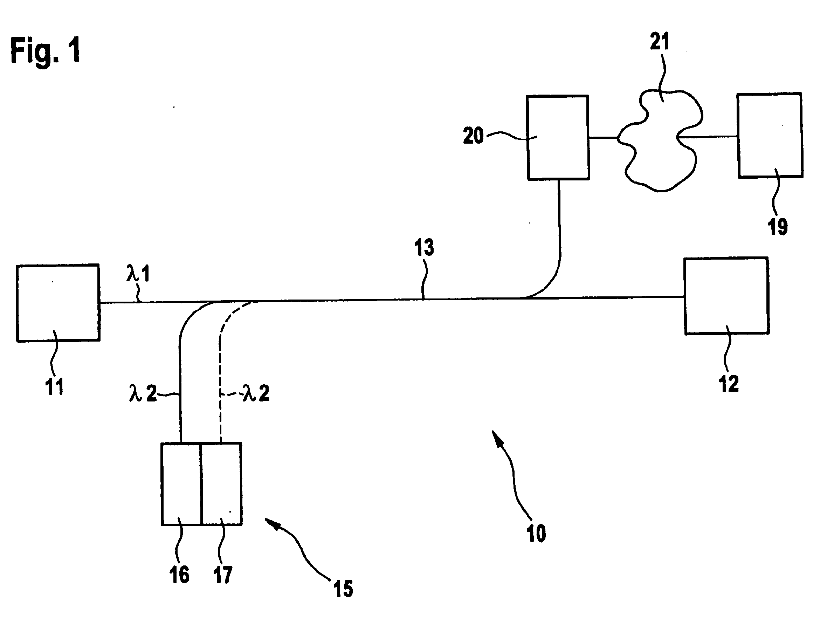

An exemplary embodiment of a method for operating a communications network according to the present invention will be explained in detail referring to the drawing. The only figure of the drawing shows a part of a communications network according to the invention.

In the figure, a part of a communications network 10 is shown. A transmitter 11 is connected with a receiver 12 via a cable 13. The transmitter 11 is adapted to transmit optical data signals to the receiver 12 with a first wavelength λ1.

The communications network 10 comprises a huge number of cables so that the optical data signals with the wavelength λ1 which are transmitted from the transmitter 11 to the receiver 12, may be forwarded within the communications network 10 as needed.

In order to monitor and test the transmission path of the network 10 including the cable 13 of the communications network 10 shown in the figure, a remote test unit 15 is provided. The remote test unit 15 comprises an optical time domain reflectometer 16 and a computer system 17. The optical time domain reflectometer 16 is coupled with the computer system 17 so that data may be exchanged between these devices.

The optical time domain reflectometer 16 is connected with the cable 13 and is able to transmit and receive optical test signals with a second wavelength λ2. The optical time domain reflectometer 16 is therefore able to send out test signals with the wavelength λ2 into the cable 13 and to receive all reflected signals of these test signals which are reflected on their way through the cable 13 to the receiver 12.

If the cable 13 has a defect, the reflected signals are influenced and changed by the defect. In particular, a break of the cable 13 creates a peak and a subsequent degradation of the received reflected signals. As already outlined, the reflected signals are then received by the optical time domain reflectometer 16.

After their receipt, the reflected signals are evaluated in particular with respect to changes due to defects. These evaluations are carried by the computer system 17 of the remote test unit 15.

If a defect of the cable 13 is detected, this defect has to be reported e.g. to a central management unit 19 within the communications network 10. For that purpose, a corresponding negative result message has to be sent by the remote test unit 15 to this central management system 19 e.g. via another remote test unit 20 and a local area network 21.

If no defect is detected, the remote test unit 15 may also send out a corresponding positive result message.

The computer system 17 creates the corresponding result message and transmits the result message to the cable 13. This may be done directly according to the dashed line in the figure, or indirectly with the help of the optical time domain reflectometer 16.

In the first case, the computer system 17 is able to send the result message in the form of optical signals with the wavelength λ2 to the cable 13. From there, the result message is forwarded to the afore-mentioned central management system 19.

In the second case, the computer system "uses" the optical time domain reflectometer 16 to send the result message in the form of optical signals with the wavelength λ2 to the cable 13. From there, the result message is forwarded again to the central management system 19.

In both cases, the result message is sent via the cable 13 in the form of optical signals with the wavelength λ2. The wavelength λ2 which is usually used for sending out the optical test signals, is used for transmitting the afore-mentioned optical result message.

The optical result message, therefore, does not require any additional lines, cables or the like for its transmission. Instead, the cable 13 and then the entire communications network 10 is used for the transmission of the result message.

Furthermore, due to the fact that the optical data signals have the wavelength λ1, that the optical test signals have the wavelength λ2 and that the optical result message is sent with the same wavelength as the optical test signals, the transmission of the result message does not influence or disturb at all any transmission of optical data signals.

The communications network 10, therefore, is not only used for the transmission of optical data signals but also for the transmission of optical result messages resulting from a test of the communications network 10.

It is furthermore possible to use the communications network 10 in a similar manner to initiate a test of the communications network 10. For that purpose, e.g. the central management system 19 sends a corresponding instruction message via the communications network 10 in the form of an optical signal with the wavelength λ2 to the remote test unit 15.

As a further possibility, the central management system 19 may send a request to the remote test unit 15 to transmit the current status of the monitored part of the communications network 10. This may then be carried out by the remote test unit 15 by sending a corresponding status message via the communications network 10 in the form of an optical signal with the wavelength λ2 to the central management system 19.

## Claims

1. A method of operating a communications network (10) comprising a cable (13) to transmit optical signals, wherein optical data signals are transmitted by a transmitter (11) with a first wavelength (λ1) on the cable (13), **characterized in that** optical test signals as well as optical result messages are transmitted by a remote test unit (15) with a second wavelength (λ2) on the cable (13).

2. The method of claim 1 wherein the optical data signals are forwarded within the communications network (10), wherein the optical test signals are provided for testing the cable (13) with respect to defects, and wherein the optical result messages are forwarded within the communications network (10).

3. A remote test unit (15) adapted to be coupled to a cable (13) of a communications network (10), wherein optical data signals are transmitted with a first wavelength (λ1) on the cable (13), **characterized in that** the remote test unit (15) is adapted to transmit optical test signals as well as optical result messages with a second wavelength (λ2) to the cable (13).

4. The remote test unit (15) of claim 3 comprising an optical time domain reflectometer (16) adapted for generating the optical test signals and for receiving the reflected signals from the cable (13).

5. The remote test unit (15) of claim 4 comprising a computer system (17) being coupled with the optical time domain reflectometer (16) and being adapted for evaluating the reflected signals and for generating the result message if a defect is detected.

6. The remote test unit (15) of claim 5 wherein the computer system (17) is adapted to transmit the result message directly as an optical signal with the second wavelength (λ2) to the cable (13).

7. The remote test unit (15) of claim 5 wherein the computer system (17) is adapted to transmit the result message indirectly with the help of the optical time domain reflectometer (16) as an optical signal with the second wavelength (λ2) to the cable (13).

8. A communications network (10) comprising:
a cable (13), and
a remote test unit (15) being coupled to the cable (13),
wherein optical data signals are transmitted with a first wavelength (λ1) on the cable (13),
wherein the remote test unit (15) is according to any one of the claims 3-7 and is adapted to transmit optical test signals as well as optical result messages with a second wavelength (λ2) to the cable (13).

## Patentansprüche

1. Ein Verfahren zum Betreiben eines Kommunikationsnetzwerks (10) mit einem Kabel (13) zum Übertragen optischer Signale, wobei optische Datensignale durch einen Transmitter (11) mit einer ersten Wellenlänge (λ1) auf das Kabel übertragen werden, **gekennzeichnet dadurch, dass** optische Testsignale genauso wie optische Ergebnismeldungen durch eine entfernte Testeinheit (15) mit einer zweiten Wellenlänge (λ2) auf das Kabel (13) übertragen werden.

2. Das Verfahren nach Anspruch 1, wobei die optischen Datensignale weitergeleitet werden innerhalb des Kommunikationsnetzwerks (10), wobei die optischen Testsignale geliefert werden zum Testen des Kabels (13) im Hinblick auf Defekte, und wobei die optischen Ergebnismeldungen innerhalb des Kommunikationsnetzwerks (10) weitergeleitet werden.

3. Eine entfernte Testeinheit (15), die angepasst ist, an das Kabel (13) eines Kommunikationsnetzwerks (10) gekoppelt zu werden, wobei optische Datensignale mit einer ersten Wellenlänge (λ1) auf das Kabel (13) übertragen werden, **gekennzeichnet**, dass die entfernte Testeinheit (15) angepasst ist, optische Testsignale genauso wie optische Ergebnismeldungen mit einer zweiten Wellenlänge (λ2) an das Kabel (13) zu übertragen.

4. Die entfernte Testeinheit (15) nach Anspruch 3 mit einem optischen Zeitbereichsreflektometer (16), der angepasst ist zum Generieren der optischen Testsignale und zum Empfangen der reflektierten Signale von dem Kabel (13).

5. Die entfernte Testeinheit (15) nach Anspruch 4 mit einem Computersystem (17), welches mit dem optischen Zeitbereichsreflektometer (16) gekoppelt ist und angepasst ist, zum Evaluieren der reflektierten Signale und zum Generieren des Ergebnisberichts, falls ein Fehler detektiert wird.

6. Die entfernte Testeinheit (15) nach Anspruch 5, wobei das Computersystem (17) angepasst ist, den Ergebnisbericht direkt als ein optisches Signal mit der zweiten Wellenlänge (λ2) an das Kabel (13) zu übertragen.

7. Die entfernte Testeinheit (15) nach Anspruch 5, wobei das Computersystem (17) angepasst ist, den Ergebnisbericht direkt mit der Hilfe des optischen Zeitbereichsreflektometers (16) als ein optisches Signal mit der zweiten Wellenlänge (λ2) an das Kabel (13) zu übertragen.

8. Ein Kommunikationsnetzwerk (10) mit:
einem Kabel (13), und
einer entfernten Testeinheit (15), die an das Kabel (13) gekoppelt ist,
wobei optische Datensignale mit einer ersten Wellenlänge (λ1) auf das Kabel (13) übertragen werden,
wobei die entfernte Testeinheit (15) einem der Ansprüche 3-7 entspricht und angepasst ist, optische Signale genauso wie optische Ergebnismeldungen mit einer zweiten Wellenlänge (λ2) auf das Kabel (13) zu übertragen.

## Revendications

1. Méthode d'exploitation d'un réseau de communications (10) comprenant un câble (13) pour la transmission de signaux optiques, les signaux de données optiques étant transmis au câble (13) par un émetteur (11) avec une première longueur d'ondes (λ1), et **caractérisé par le fait que** de signaux de test optiques, comme les messages de résultat optiques, sont transmis au câble (13) par une unité de test à distance (15) avec une deuxième longueur d'ondes (λ2).

2. Méthode de la revendication 1, selon laquelle les signaux de données optiques sont réacheminés dans le réseau de communications (10), les signaux de test optiques sont fournis pour tester le câble (13) en tenant compte des défauts et les messages de résultat optiques sont réacheminés dans le réseau de communications (10).

3. Unité de test à distance (15) adaptée pour être couplée au câble (13) d'un réseau de communications (10), les signaux de données optiques étant transmis au câble (13) avec une première longueur d'ondes (λ1), **caractérisée par le fait que** l'unité de test à distance (15) est adaptée à la transmission au câble (13) de signaux de test optiques, ainsi que de messages de résultat optiques, avec une deuxième longueur d'ondes (λ2).

4. Unité de test à distance (15) de la revendication 3 comprenant un réflectomètre optique dans le domaine temporel (16) adapté pour générer les signaux de test optiques et pour recevoir les signaux renvoyés du câble (13).

5. Unité de test à distance (15) de la revendication 4 comprenant un système informatique (17) couplé au réflectomètre optique dans le domaine temporel (16) et adapté pour évaluer les signaux renvoyés et pour générer le message de résultat correspondant en cas de détection d'un défaut.

6. Unité de test à distance (15) de la revendication 5 dont le système informatique (17) est adapté pour transmettre au câble (13) le message de résultat directement sous forme de signal optique avec la deuxième longueur d'ondes (λ2).

7. Unité de test à distance (15) de la revendication 5 dont le système informatique (17) est adapté pour transmettre au câble (13) le message de résultat indirectement à l'aide du réflectomètre optique dans le domaine temporel (16) sous forme de signal optique avec la deuxième longueur d'ondes (λ2).

8. Réseau de communications (10) comprenant :
un câble (13) et
une unité de test à distance (15) couplée au câble (13),
les signaux de données optiques étant transmis au câble (13) avec une première longueur d'ondes (λ1) et
l'unité de test à distance (15) selon l'une des revendications 3 à 7 étant adaptée à la transmission au câble (13) de signaux de test optiques comme de messages de résultat optiques avec une deuxième longueur d'ondes (λ2).
